# EUROPÄISCHE PATENTSCHRIFT

(11) **EP 2 632 780 B1**
(45) Veröffentlichungstag und Bekanntmachung des Hinweises auf die Patenterteilung: **21.06.2017**
(21) Anmeldenummer: 11775793.0
(22) Anmeldetag: 26.10.2011
(51) Int. Cl.: B60T 7/04, B60T 7/08, B60T 7/12, B60T 8/17, B60T 8/171, B60T 8/32, B60T 8/36, B60T 13/68, B60T 13/74, B60T 17/04, B60T 8/172, B60T 8/176, B60T 8/24, B60T 8/26

(54) **DRUCKMITTELBETÄTIGTE BREMSEINRICHTUNG EINES FAHRZEUGS MIT IN EIN BREMSSTEUERGERÄT IMPLEMENTIERTEN STEUERROUTINEN EINER BERGANFAHRHILFE- ODER KRIECHUNTERDRÜCKUNGS-FUNKTION**
PRESSURE-MEDIUM-ACTIVATED BRAKE DEVICE OF A VEHICLE HAVING CONTROL ROUTINES, IMPLEMENTED IN A BRAKE CONTROLLER UNIT, OF A HILL START ASSISTANT FUNCTION OR CREEP SUPPRESSION FUNCTION
DISPOSITIF DE FREINAGE D'UN VÉHICULE, ACTIONNÉ PAR FLUIDE SOUS PRESSION, COMPORTANT DES PROCÉDURES DE COMMANDE D'UNE FONCTION D'AIDE AU DÉMARRAGE EN CÔTE OU DE SUPPRESSION DU RAMPEMENT, IMPLÉMENTÉES DANS UNE UNITÉ DE COMMANDE

(30) Priorität: 29.10.2010 DE 102010050101
(43) Veröffentlichungstag der Anmeldung: 04.09.2013
(73) Patentinhaber: KNORR-BREMSE Systeme für Nutzfahrzeuge GmbH, 80809 München (DE)
(72) Erfinder: SCHÄFERS, Andreas, 71282 Hemmingen (DE); MUSTAPHA, Adnan, 75433 Maulbronn (DE)
(74) Vertreter: Schönmann, Kurt
(86) Internationale Anmeldenummer: PCT/EP2011/068746
(87) Internationale Veröffentlichungsnummer: WO 2012/055911

(56) Entgegenhaltungen:
- EP-A2- 0 274 610
- EP-A2- 0 604 864
- EP-A2- 1 008 503
- WO-A1-03/043863
- DE-A1- 4 332 459
- DE-A1- 19 625 919
- DE-A1-102008 007 709
- GB-A- 2 201 743

## Beschreibung

### Stand der Technik

Die Erfindung geht aus einer druckmittelbetätigten Bremseinrichtung eines Fahrzeugsohne Bremsdruckregelung, jedoch mit einer Bremsschlupfregelung (ABS) zur fahrerunabhängigen Regelung des Bremsschlupfs während eines Bremsvorgangs sowie mit einer Antriebsschlupfregelung (ASR) zur fahrerunabhängigen Regelung des Antriebsschlupfes während eines Beschleunigungsvorgangs, wobei im Rahmen der Bremsschlupfregelung (ABS) in zwischen einem Betriebsbremsventil und wenigstens einem Bremszylinder verlaufende Druckleitungen wenigstens ein von einem Bremssteuergerät gesteuertes ABS-Drucksteuerventil (PCV) zum Drucksteigern, Druckhalten und Drucksenken des Drucks im zugeordneten Bremszylinder geschaltet ist und im Rahmen der Antriebsschlupfregelung (ASR) wenigstens ein vom Bremssteuergerät gesteuertes ASR-Ventil (TCV) zum Herstellen einer Druckluftverbindung zwischen einem Druckmittelvorrat und dem wenigstens einen ABS-Drucksteuerventil (PCV) vorgesehen ist, sowie mit einer mittels Steuerroutinen gesteuerten Berganfahrhilfe- und/oder Kriechunterdrückungs-Funktion, im Rahmen welcher der im Rahmen einer vorangegangenen Bremsung durch den Fahrer erzeugte Bremsdruck in wenigstens einigen Bremszylindern des Fahrzeugs bei erkanntem Stillstand des Fahrzeugs an einem Berg oder bei erkanntem Kriechen des Fahrzeugs in dem wenigstens einen Bremszylindern wenigstens gehalten wird, ohne dass der Fahrer weiterhin die Bremse betätigen muss, gemäß dem Oberbegriff von Anspruch 1.

Ein Fahrzeug mit Automatikgetriebe muss im Stillstand vom Fahrer mit Hilfe der Bremse festgehalten werden, da das Fahrzeug bei eingelegter Fahrstufe wegen des Wandlers zur langsamen Vorwärtsbewegung neigt ("Kriechen") Der Fahrer kann dadurch entlastet werden, dass die einmal aufgebrachte, notwendige Bremswirkung, im allgemeinen der Bremsdruck, im wesentlichen konstant gehalten wird. Dies kann beispielsweise dadurch geschehen, dass der vom Fahrer initiierte Bremsdruck durch ein Ventil zwischen Hauptbremszylinder und Radbremszylinder im Rad eingesperrt wird sobald das Fahrzeug steht.

Ein Fahrzeuggeschwindigkeitssensor erkennt dazu den Fahrzeugstillstand. Der Fahrer kann anschließend den Fuß von der Bremse nehmen bei weiterhin gebremsten Rädern. Der Bremsdruck in den Rädern wird abgebaut, sobald der Fahrer das Fahrpedal betätigt und damit einen Anfahrwunsch signalisiert. Ein solches System zur Kriechunterdrückung ist beispielsweise der DE-OS 43 32459 zu entnehmen.

Das Anfahren eines Fahrzeugs mit Schaltgetriebe an einer Steigung ist ein komplexer Vorgang, der den kombinierten Einsatz von Fahr- und Kupplungspedal im Zusammenspiel mit der Betätigung der Handbremse erfordert. Die Schwierigkeit besteht darin, die Bremswirkung beziehungsweise das Bremsmoment während des Anfahrvorgangs so zu dosieren, dass das Fahrzeug nicht in die falsche Richtung rollt, bis das über das Schaltgetriebe übertragene Antriebsmoment groß genug für das eigentliche Anfahren ist. Es gibt viele Vorschläge, wie der Fahrer in dieser Situation entlastet werden kann. Bei Fahrzeugen mit hydraulischen Bremsanlagen kann beispielsweise der Radbremsdruck über ein Steuerventil vom Hauptbremszylinderdruck getrennt werden. Der einmal aufgebrachte Bremsdruck des Fahrers bleibt somit an den Rädern erhalten, auch wenn der Fahrer das Bremspedal nicht mehr betätigt. Dieser Vorgang wird mit einem speziellen Schalter aktiviert. Der Fahrer kann nun den Anfahrvorgang einleiten, ohne sich um die Bremse kümmern zu müssen. Das Steuerventil wird geöffnet, sobald eine Fahrzeugbewegung über eine Veränderung der Drehstellung der Antriebswelle erkannt wurde. Zu solchen Anfahrhilfen ("hillholder") soll beispielhaft auf die DE-OS 38 32 025 verwiesen werden.

Eine gattungsgemäße druckmittelbetätigte Bremseinrichtung mit Kriechunterdrückungs- und Berganfahrhilfe- (Hillholder) Funktion ist beispielsweise aus der DE 196 25 919 A1 bekannt. Dort werden zur Sensierung der Aktivierungsbedingungen für den Betriebsmodus "Kriechunterdrückung" bzw. "Hillholder" nur solche Signale herangezogen werden, die in Fahrzeugen mit einem ABS- und/oder ASR-System ohnehin vorliegen. Die Funktionen der Kriechunterdrückung bzw. der Anfahrhilfe können dann ohne Zusatzsensorik in ein ABS/ASR-System integriert werden. Die Steuerroutinen für die Kriechunterdrückungs- und Berganfahrhilfe- (Hillholder) Funktion sind gemäß Fig.2a und Fig.2b dieser Druckschrift jeweils in einem eigenen Steuergerät (dort Bezugszahlen 204a bzw. 204b) implementiert. Weiterhin sind neben Bremsdruckaufbauventilen und Bremsdruckabsenkventilen (dort Bezugszahlen 19 bzw. 20, die im Rahmen eines Radschlupfregelbetriebs von einem dort nicht explizit gezeigten Steuergerät gesteuert werden, Umschaltventile USV1 und USV2 vorhanden, welche lediglich zur Realisierung der Kriechunterdrückungs- und Berganfahrhilfe- (Hill-holder) Funktion vorgesehen sind.

### Aufgabe

Der vorliegenden Erfindung liegt die Aufgabe zugrunde, eine Bremseinrichtung der der eingangs erwähnten Art derart weiter zu entwickeln, dass sie einfacher aufgebaut und kostengünstiger zu realisieren ist.

Diese Aufgabe wird erfindungsgemäß durch die Merkmale von Anspruch 1 gelöst.

### Offenbarung der Erfindung

Gemäß der Erfindung ist vorgesehen, dass die Steuerroutinen der Berganfahrhilfe- und Kriechunterdrückungs-Funktion in dem Bremssteuergerät implementiert sind und dass das Bremssteuergerät ausgebildet ist, dass es zur Realisierung der Berganfahrhilfe- oder Kriechunterdrückungs-Funktion ausschließlich die ABS-Druckssteuerventile und das wenigstens eine ASR-Ventil ansteuert.

In diesem Fall sind daher sämtliche die Fahrzeugbetriebsbremsen betreffende Routinen für Betriebsbremsungen mit und ohne ABS, die ASR-Funktion sowie die Berganfahrhilfe- und/oder Kriechunterdrückungs-Funktion in einem einzigen Bremssteuergerät integriert, welches beim Stand der Technik lediglich die Betriebsbrems-, ABS- und ASR-Funktionen steuert. Dadurch wird der Aufwand betreffend Hardware und Verkabelung bzw. Verrohrung reduziert.

Insbesondere können alle genannten Funktionen in einer konventionellen druckmittelbetätigten Bremseinrichtung mit lediglich ABS- und ASR-Funktionsumfang realisiert werden, ohne dass noch weitere Ventile, Verkabelungen oder Verrohrungen vorgesehen werden müssen, weil die für die ABS/ASR-Funktionen ohnehin vorhandenen Ventile gleichzeitig zur Ausführung der Berganfahrhilfe- und/oder Kriechunterdrückungs-Funktion herangezogen werden. Weitere Ventile bzw. Aktuatoren sind nicht notwendig.

Nicht zuletzt ist kein Ausbau der Bremseinrichtung als elektronisch geregeltes Bremssystem (EBS) notwendig, um die genannte Berganfahrhilfe- oder Kriechunterdrückungs-Funktion realisieren zu können, was sich günstig auf die Kosten eines solchen Systems auswirkt. Solche für die Erfindung nicht notwendigen elektronisch geregelten Bremssysteme (EBS) umfassen regelmäßig Druckregelmoduln (DRM), welche die elektrisch eingesteuerten Sollbremsdrücke in pneumatische Drücke umsetzen. Dazu umfasst ein Druckregelmodul ein eigenes Steuergerät sowie meistens eine Einlass- Auslassventil-Kombination, die ein Relaisventil steuern. Ein integrierter Drucksensor misst den ausgesteuerten Bremsdruck und meldet ihn an das Steuergerät zur Ausregelung der Druckabweichung. Ein solches elektronisch geregeltes Bremssystem (EBS) ist daher relativ aufwändig.

Die Bremseinrichtung gemäß der Erfindung soll demgegenüber ohne Bremsdruckregelung ausgeführt sein, d.h. im Falle einer pneumatischen Bremseinrichtung kein elektronisch geregeltes Bremssystem (EBS) mit Druckregelmoduln darstellen, sondern eine konventionelle druckmittelbetätigte Bremseinrichtung mit lediglich ABS- und ASR-Funktion.

Durch die in den Unteransprüchen aufgeführten Maßnahmen sind vorteilhafte Weiterbildungen und Verbesserungen der in Anspruch 1 angegebenen Erfindung möglich.

Gemäß einer besonders zu bevorzugenden Ausführungsform werden im Falle eines aktivierten Betriebsmodus "Berganfahrhilfe- und/oder Kriechunterdrückungs-Funktion" und bei gelöster Bremse das wenigstens eine ABS-Ventil und das ASR-Ventil durch das Bremssteuergerät derart angesteuert, dass das wenigstens eine ABS-Drucksteuerventil in eine Druckhalte-Stellung geschaltet wird, in welcher der durch die vorangehende Bremsung erzeugte Bremsdruck in dem wenigstens einen Bremszylinder gehalten wird, und das wenigstens eine ASR-Ventil in eine Stellung geschaltet wird, in welcher es das wenigstens eine ABS-Drucksteuerventil eingangsseitig mit dem Druckmittelvorrat verbindet. Letzteres ist notwendig, weil ABS-Drucksteuerventile den im Laufe einer vorangehenden Bremsbetätigung aufgebrachten Bremsdruck erfahrungsgemäß nicht über eine längeren Zeitdauer halten können, so dass vom Druckmittelvorrat Druckmittel nachgeliefert werden muss, was dann über das entsprechend geschaltete ASR-Ventil geschieht.

Weiterhin ist bevorzugt wenigstens ein Längsbeschleunigungssignale an das Bremssteuergerät aussteuernder Längsbeschleunigungssensor vorgesehen, wobei der Betriebsmodus "Berganfahrhilfe- und/oder Kriechunterdrückungs-Funktion" vom Bremssteuergerät aktiviert wird, wenn die gemessene Längsbeschleunigung einen unteren Grenzwert überschreitet und in das Bremssteuergerät weiterhin Signale eingesteuert werden, welche einen Stillstand des Fahrzeugs repräsentieren. Das Überschreiten eines solchen unteren Grenzwerts durch das Längsbeschleunigungssignal deutet daraufhin, dass das Fahrzeug an einem Anstieg bzw. an einem Gefälle in den Stillstand abgebremst wurde, weil auch dann noch eine gewisse Längsbeschleunigung detektierbar ist, welche von der auf das Fahrzeug wirkenden Hangabtriebskraft herrührt.

Der Stillstand des Fahrzeugs wird bevorzugt durch Signale von der ABS-Funktion und/oder der ASR-Funktion zugeordneten Raddrehzahlsensoren detektiert, die im Rahmen der hinreichend bekannten ABS- und ASR-Funktionen ohnehin vorhanden sind bzw. benötigt werden.

Darüber hinaus ist beispielsweise wenigstens ein Drucksensor in einen Druckpfad zwischen dem Betriebsbremsventil und dem wenigstens einen ABS-Drucksteuerventil geschaltet, wobei ein Lösen der Bremse durch einen einen charakteristischen Druckwert unterschreitenden Druckwert in diesem Druckpfad detektierbar ist.

Wenn dann die beiden Voraussetzungen - gelöste Betriebsbremse und gleichzeitig aktivierte Berganfahrhilfe- und/oder Kriechunterdrückungs-Funktion - gegeben sind, werden das wenigstens eine ABS-Drucksteuerventil und das wenigstens eine ASR-Ventil in Stellungen geschaltet wird, in welcher das ASR-Ventil das wenigstens eine ABS-Drucksteuerventil eingangsseitig mit dem Druckmittelvorrat verbindet, um ein Halten des zuletzt aufgebrachten Bremsdrucks in dem dem betreffenden ABS-Drucksteuerventil zugeordneten Bremszylinder zu bewirken.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: einen schematischen Schaltplan einer pneumatischen Bremseinrichtung eines Nutzfahrzeugs gemäß einer bevorzugten Ausführungsform der Erfindung;
- Fig.2: ein Diagramm, in welchem unter anderem der Bremsdruck und die Fahrzeuggeschwindigkeit über der Zeit während eines Einbremsens des Fahrzeugs in den Stillstand gezeigt sind.

### Beschreibung des Ausführungsbeispiels

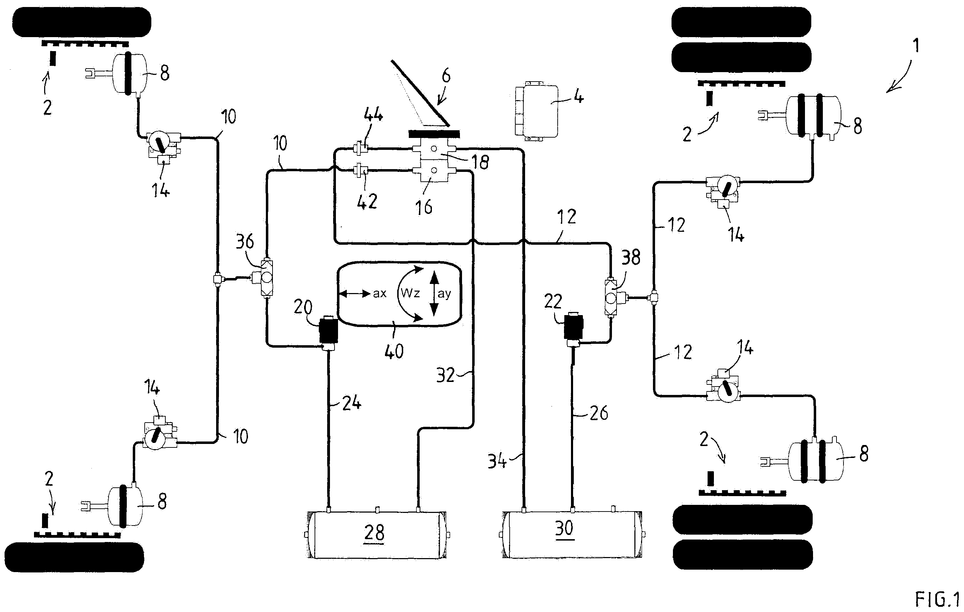

Die in Fig.1 in Form eines schematischen Schaltplans gezeigte pneumatische Bremseinrichtung 1 ist eine konventionelle Bremsrichtung ohne Bremsdruckregelung, jedoch mit einer Bremsschlupfregelung (ABS) zur fahrerunabhängigen Regelung des Bremsschlupfs während eines Bremsvorgangs sowie mit einer Antriebsschlupfregelung (ASR) zur fahrerunabhängigen Regelung des Antriebsschlupfes während eines Beschleunigungsvorgangs.

Jedem Rad ist ein Raddrehzahlsensor 2 zugeordnet, damit ein Bremssteuergerät 4 Informationen über das jeweilige Raddrehverhalten erhält, um zunächst den Bremsschlupf und den Antriebsschlupf im Rahmen von ABS und ASR regeln zu können.

Im Rahmen der Bremsschlupfregelung (ABS) sind zwischen einem durch einen Fahrer betätigbaren Betriebsbremsventil 6 und wenigstens einem jeweils einem rad zugeordneten Bremszylinder 8 verlaufende Druckleitungen 10, 12 je Fahrzeugseite und für die Räder einer Vorderachse und die Räder einer Hinterachse wenigstens ein von einem Bremssteuergerät gesteuertes ABS-Drucksteuerventil 14 zum Drucksteigern, Druckhalten und Drucksenken des Drucks im zugeordneten Bremszylinder 8 geschaltet. Diese Druckleitungen 10, 12 erstrecken sich mit einem Abschnitt ausgehend von einem pneumatischen Vorderachskanal 16 und einem pneumatischen Hinterachskanal 18 des Betriebsbremsventils 6 jeweils bis zu einem Eingang eines Wechselventils 36, 38 dessen Ausgang dann über den anderen Abschnitt der Druckleitungen 10, 12 mit dem betreffenden ABS-Drucksteuerventil 14 in Verbindung steht. Der andere Eingang der Wechselventile 36, 38 ist jeweils mit einem ASR-Ventil 20, 22 verbunden, welches eingangsseitig über jeweils eine Vorratdruckleitung 24, 26 in Strömungsverbindung mit einem Druckluftvorrat 28, 30 für die Vorderachse bzw. für die Hinterachse steht. Weiterhin sind die Druckluftvorräte 28, 30 über Vorratsdruckleitungen 32, 34 mit dem jeweiligen Kanal 16, 18 des Betriebsbremsventils 6 verbunden.

Der Aufbau solcher ABS-Drucksteuerventile 14 als von Magnetventilen vorgesteuerte Membranventile ist hinreichend bekannt. Sie dienen zum Drucksteigern, Druckhalten und Drucksenken im Rahmen der ABS- bzw. ASR-Funktion zum Einregeln des Radschlupfes auf einen zugelassenen oder optimalen Schlupf in bekannter Weise. Deshalb soll auf die Funktion solcher ABS-Drucksteuerventile 14 hier nicht weiter eingegangen werden.

Genauso sind ASR-Ventile 20 hinreichend bekannt, welche im Rahmen der Antriebsschlupfregelung (ASR) eine Druckluftverbindung zwischen dem betreffenden Druckmittelvorrat 28, 30 und den ABS-Drucksteuerventilen 14 herstellen, um beispielsweise durch Taktung der ABS-Drucksteuerventile 14 einen Bremsdruck in den Bremszylindern 8 von unzulässig antriebsschlupfenden Rädern zu erzeugen, welcher diese dann auf eine zugelassenen oder optimmalen Antriebsschlupf automatisch und ohne Zutun des Fahrers einbremst. Bevorzugt sind die ASR-Ventile 20, 22 jeweils als 3/2-Wege-Magnetventil ausgebildet, wobei diese gemäß einer Sperrstellung den Vorratsdruck vom Eingang des betreffenden Wechselventils 36, 38 absperren und diesen mit einer Entlüftung verbinden und gemäß einer Durchlassstellung den Vorratsdruck des betreffenden Druckluftvorrats 28, 30 auf den Eingang des Wechselventils 36, 38 schalten.

Die Bremseinrichtung 1 verfügt nicht zuletzt über eine mittels Steuerroutinen gesteuerte Berganfahrhilfe- und/oder Kriechunterdrückungs-Funktion, im Rahmen welcher der im Rahmen einer vorangegangenen Bremsung durch den Fahrer erzeugte Bremsdruck in den Bremszylindern 8 des Fahrzeugs bei erkanntem Stillstand des Fahrzeugs an einem Berg oder bei erkanntem Kriechen des Fahrzeugs in den Bremszylindern 8 gehalten wird, ohne dass der Fahrer weiterhin die Bremse betätigen muss. Dieses Halten des Bremsdrucks in den Bremszylindern 8 erfolgt dann bevorzugt solange, bis ein vom Fahrer initiierter Anfahrvorgang detektiert wird.

Genauer ist vorgesehen, dass die Steuerroutinen der Berganfahrhilfe- und Kriechunterdrückungs-Funktion in dem Bremssteuergerät 4 implementiert sind, welches ansonsten zumindest die Betriebsbremsfunktion und auch die ABS-und ASR-Funktionen steuert. Weiterhin ist das Bremssteuergerät 4 ausgebildet, dass es zur Realisierung der Berganfahrhilfe- oder Kriechunterdrückungs-Funktion ausschließlich die ABS-Drucksteuerventile 14 und die ASR-Ventile 20, 22 ansteuert, wie später noch detailliert erläutert werden wird.

Weiterhin ist ein Längsbeschleunigungssensor 40 vorgesehen, welcher die jeweilige Längsbeschleunigung aₓ des Fahrzeugs als Längsbeschleunigungssignal sowie die Querbeschleunigung ay an das Bremssteuergerät 4 aussteuert. Nicht zuletzt ist jeweils ein Drucksensor 42, 44 in die Druckleitungen 10, 12 zwischen den Vorderachskanal 16 und den Hinterachskanal 18 des Betriebsbremsventils 6 und das betreffende Wechselventil 36, 38 geschaltet, welcher den fahrerwunschabhängig erzeugten Steuerdruck bzw. Bremsdruck an das Bremssteuergerät 4 meldet.

Vor diesem Hintergrund ist die Funktionsweise der vom Bremssteuergerät 4 gesteuerten Bremseinrichtung 1 wie folgt:

Im Rahmen einer Betriebsbremsung ohne aktivierte ABS- oder ASR- Funktion erzeugt das Betriebsbremsventil 6 einen Steuerdruck in dem Vorderachskanal 16 bzw. in dem Hinterachskanal 18, welcher an den Eingang des betreffenden Wechselventils 36, 38 eingesteuert wird. Da am anderen Eingang des Wechselventils 36, 38 dann wegen der nicht aktivierten ASR-Funktion und damit jeweils in ihre Sperrstellung geschalteten ASR-Ventile 20, 22 kein Vorratsdruck aus den Druckluftvorräten 28, 30 ansteht, wird der dann größere Steuerdruck des Betriebsbremsventils 6 als Bremsdruck durch die dann auf Durchlass geschalteten ABS-Drucksteuerventile 14 in die pneumatischen Bremszylinder 8 gesteuert, um eine Betriebsbremsung hervorzurufen

Falls im Rahmen einer Betriebsbremsung der Bremsschlupf an einem oder mehreren Rädern einen zugelassenen oder optimalen Bremsschlupf überschreitet, was über die Raddrehzahlsignale der Raddrehzahlsensoren 2 festgestellt wird, so werden die ABS-Drucksteuerventile 14 der betreffenden Räder im Sinne von Drucksteigern, Druckhalten und Drucksenken vom Bremssteuergerät 4 angesteuert, um den Bremsschlupf auf einen zulässigen oder optimalen Bremsschlupf einzuregeln. Gleichzeitig sind die ASR-Ventile 20, 22 in ihre Sperrstellung geschaltet, um zu verhindern, dass der in dem Vorderachskanal 16 und dem Hinterachskanal 18 fahrenivunschabhängig erzeugte Steuerdruck vom jeweiligen Vorratsdruck an den Wechselventilen 36, 38 überspielt wird.

Wenn bei einem Beschleunigungsvorgang eines oder mehrere Räder einer Achse einen unzulässigen oder übermäßigen Antriebsschlupf aufweisen, was ebenfalls anhand der Raddrehzahlsignale der Raddrehzahlsensoren 2 feststellbar ist, wird das ASR-Ventil 36, 38 an der betreffenden Achse in Durchlassstellung geschaltet, um den Vorratsdruck des betreffenden Druckluftvorrats 28, 30 auf den Eingang des betreffenden Wechselventils 36, 38 zu schalten. Falls an dem anderen Eingang des Wechselventils 36, 38 kein höherer, vom Betriebsbremsventil 6 fahrerwunschabhängig ausgesteuerter Steuerdruck anliegt, so wird der Vorratsdruck an die ABS-Drucksteuerventile 14 der antriebsschlupfenden Räder weitergeleitet, welche beispielsweise durch Taktung den Vorratsdruck so modulieren, dass sich an den betreffenden Rädern der gewünschte Soll-Antriebsschlupf einstellt.

Für den Fall, dass das Fahrzeug mit einem bestimmten Bremsdruck oder Steuerdruck vom Fahrer über das Betriebsbremsventil in den Stillstand eingebremst wurde, der Betriebsmodus "Berganfahrhilfe- und/oder Kriechunterdrückungs-Funktion" aktiviert wurde und der Fahrer dann die Bremse gelöst hat, werden mittels des Bremssteuergeräts 4 vorzugsweise alle ABS-Drucksteuerventile 14 in Druckhalte-Stellung und die ASR-Ventile 20, 22 in Durchlassstellung geschaltet. Gemäß einer weiteren Ausführungsform können auch nur ausgewählte ABS-Drucksteuerventile 14 und auch nur das zugeordnete ASR-Ventil 20, 22 in dieser Weise geschaltet werden.

Denn weil die ABS-Drucksteuerventile 14 auch in der Stellung "Druckhalten" den Bremsdruck in den Bremszylindern 8 nicht über längere Zeit aufrecht erhalten können, ist eine Nachlieferung von Druckluft aus den Druckluftvorräten 28, 30 notwendig, damit der zuletzt fahrerwunschabhängig erzeugte höchste Betriebsbremsdruck in den Bremszylindern 8 gehalten werden kann, um das Fahrzeug eingebremst zu halten.

Insbesondere der Betriebsmodus "Berganfahrhilfe" wird vom Bremssteuergerät 4 beispielsweise automatisch aktiviert, wenn das Längsbeschleunigungssignal des Längsbeschleunigungssensors 40 einen unteren Grenzwert überschreitet und in das Bremssteuergerät 4 weiterhin Signale eingesteuert werden, welche einen Stillstand des Fahrzeugs repräsentieren. Das Überschreiten eines solchen unteren Grenzwerts durch die gemessene Längsbeschleunigung aₓ im Stillstand deutet daraufhin, dass das Fahrzeug an einem Anstieg bzw. an einem Gefälle in den Stillstand abgebremst wurde, weil dann eine Längsbeschleunigung aₓ detektierbar ist, welche dann eine Komponente der Erdbeschleunigung g darstellt, die die auf das Fahrzeug wirkende Hangabtriebskraft hervorruft.

Der Stillstand des Fahrzeugs wird durch Signale der Raddrehzahlsensoren 2 erkannt. Eine gelöste Bremse ist durch einen charakteristischen Druckwert unterschreitenden Steuerdruck in den Druckleitungen 10, 12 von den Drucksensoren 42, 44 detektierbar.

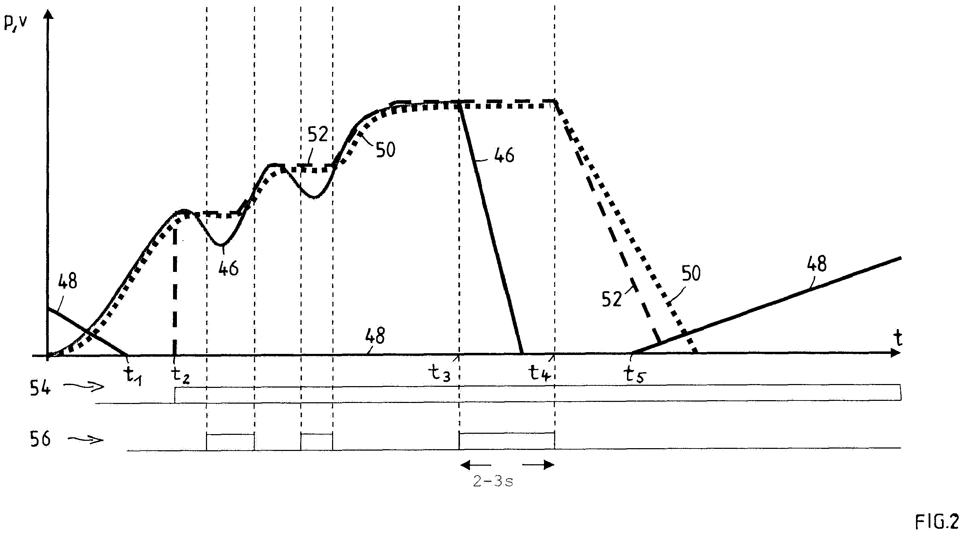

Das Verfahren, welches im Rahmen der Funktion "Berganfahrhilfe" durch die im Bremssteuergerät 4 gespeicherten Steuerroutinen ausgeführt wird, soll nun im Folgenden anhand eines konkreten Beispiels erläutert werden. Im Diagramm gemäß Fig.2 sind ist der Verlauf des vom Betriebsbremsventils 6 ausgesteuerten Bremsdrucks (durchgezogene Linie) 46, der Verlauf der Fahrzeuggeschwindigkeit (durchgezogene Linie) 48 sowie der Verlauf des im Rahmen der Funktion "Berganfahrhilfe" erzeugten Drucks (gepunktete Linie) 50 in den Bremszylindern dargestellt. Weiterhin ist der Verlauf des Bremsdrucks (gestrichelte Linie) 52 dargestellt, welcher sich einstellt, wenn nach Art eines Schleppzeigers der zuletzt höchste nach Fahrerwunsch erzeugte Bremsdruck konserviert bzw. "mitgeschleppt" wird, solange, bis der nach Fahrerwunsch erzeugte Bremsdruck einen noch höheren Wert einnimmt.

Zu Beginn (t = 0) liegt noch eine gewisse Fahrzeuggeschwindigkeit 48 vor, auch wenn bereits ein gewisser vom Fahrer erzeugter Bremsdruck 46 vorhanden ist, jedoch ist der Gradient negativ (Verzögerung). Zum Zeitpunkt t₁ ist dann Stillstand gegeben. Etwas später, zum Zeitpunkt t₂ misst der Längsbeschleunigungssensor 40 trotz des detektierten Stillstands eine charakteristische Längsbeschleunigung aₓ, was auf das Vorliegen einer Steigung hindeutet. Das Signal des Längsbeschleunigungssensors 40 ist in dem unteren Diagramm 54 in Fig.2 vereinfacht veranschaulicht.

Weil ein detektierter Stillstand sowie ein in diesem Zustand vorhandene charakteristische Längsbeschleunigung aₓ auf ein Einbremsen des Fahrzeugs an einer Steigung hindeuten, wird die Funktion "Berganfahrhilfe" durch das Bremsteuergerät 4 zum Zeitpunkt t₂ aktiviert.

Die aktivierte Funktion "Berganfahrhilfe" sorgt nun dafür, dass, auch während des Stillstands, der jeweils der zuletzt vom Fahrer erzeugte höchste Bremsdruckwert 52 in einem Speicher des Bremssteuergeräts 4 gespeichert wird, wie durch die in gestrichelten Linien gezeichnete Kurve in Fig.2 veranschaulicht wird. Im vorliegenden Fall hat der Fahrer daher den vom Betriebsbremsventil 6 erzeugten Bremsdruck zwei Mal reduziert, jedoch wird der zuletzt höchste oder größte Bremsdruckwert gespeichert. Die zeitlichen Perioden, in denen der jeweils letzte höchste Bremsdruckwert abgespeichert ist, sind in dem in Fig.2 untersten Diagramm 56 veranschaulicht.

Zum Zeitpunkt t₃ löst der Fahrer die Bremse, wodurch der zuletzt von ihm erzeugte und gespeicherte Bremsdruckwert 52 durch das oben beschriebene Schalten der ABS-Drucksteuerventile 14 und der ASR-Ventile 20, 22 in den Bremszylindern 8 aufrecht erhalten wird, wie durch den in gepunkteter Linie gezeichneten Verlauf 50 des nun im Rahmen der Funktion "Berganfahrhilfe" erzeugten Bremsdrucks veranschaulicht wird.

Dieser zuletzt, d.h. beim oder vor dem Lösen der Bremse durch den Fahrer zum Zeitpunkt t₃ durch ihn erzeugte höchste Bremsdruckwert wird nun bevorzugt über eine vorgegebene Zeitdauer in den Bremszylindern gehalten, z.B. einige Sekunden lang. Nach Ablauf dieser vorgegebenen Zeitdauer oder wenn, wie hier zum Zeitpunkt t₄ erkannt wurde, dass ein für einen Anfahrvorgang ausreichendes Antriebsmoment einer Antriebsmaschine des Fahrzeugs vorliegt, wird der Bremsdruck durch Schalten der ABS-Drucksteuerventile 14 zum Drucksenken sowie der ASR-Ventile 20, 22 in ihre Sperrstellung wieder gesenkt, so dass die Fahrzeuggeschwindigkeit 48 ab dem Zeitpunkt t₅ wieder ansteigt. Zwischen den Zeitpunkten t₁ und t₅ ist die Fahrzeuggeschwindigkeit Null (Stillstand).

Aufgrund der Wechselventile 36, 38 ist jedoch stets gewährleistet, dass ein einem Fahrerwunsch entsprechend höherer Bremsdruck als der zuletzt höchste Bremsdruck während des Zeitraums der automatischen Eingebremsthaltens, also zwischen den Zeitpunkten t₃ und t₄, stets Vorrang hat. Dann steuern die Wechselventile 36, 38 diesen dann höheren fahrerwunschabhängigen Bremsdruck an die Bremszylinder 8 weiter, wie anhand von Fig.1 leicht vorstellbar ist.

Das Arbeitsmedium der Bremseinrichtung kann jegliches Druckmedium sein, also anstatt Luft auch Hydraulikflüssigkeit. In diesem Fall sind die pneumatuischen Bremszylinder 8 durch hydraulikgeeignete Bremsaktuatoren zu ersetzen.

### Bezugszahlenliste

- 1: Bremseinrichtung
- 2: Raddrehzahlsensor
- 4: Bremssteuergerät
- 6: Betriebsbremsventil
- 8: Bremszylinder
- 10: Druckleitung
- 12: Druckleitung
- 14: ABS-Drucksteuerventil
- 16: VA - Kanal
- 18: HA - Kanal
- 20: ASR - Ventil
- 22: ASR - Ventil
- 24: Vorratsdruckleitung
- 26: Vorratsdruckleitung
- 28: Vorrat
- 30: Vorrat
- 32: Vorratsdruckleitung
- 34: Vorratsdruckleitung
- 36: Wechselventil
- 38: Wechselventil
- 40: Längsbeschleunigungssensor
- 42: Drucksensor
- 44: Drucksensor
- 46: fahrenwunschabhängiger Bremsdruck
- 48: Fahrzeuggeschwindigkeit
- 50: Bremszylinderdruck
- 52: gespeicherte Bremsdruckwerte
- 54: Diagramm
- 56: Diagramm

## Patentansprüche

1. Druckmittelbetätigte Bremseinrichtung (1) eines Fahrzeugs ohne Bremsdruckregelung, jedoch mit einer Bremsschlupfregelung (ABS) zur fahrerunabhängigen Regelung des Bremsschlupfs während eines Bremsvorgangs sowie einer Antriebsschlupfregelung (ASR) zur fahrerunabhängigen Regelung des Antriebsschlupfes während eines Beschleunigungsvorgangs, wobei im Rahmen der Bremsschlupfregelung (ABS) in zwischen einem Betriebsbremsventil (6) und wenigstens einem Bremszylinder (8) verlaufende Druckleitungen (10, 12) wenigstens ein von einem Bremssteuergerät (4) gesteuertes ABS-Drucksteuerventil (14) zum Drucksteigern, Druckhalten und Drucksenken des Drucks im zugeordneten Bremszylinder (8) geschaltet ist und im Rahmen der Antriebsschlupfregelung wenigstens ein vom Bremssteuergerät (4) gesteuertes ASR-Ventil (20, 22)) zum Herstellen einer Druckluftverbindung zwischen einem Druckmittelvorrat (28, 30) und dem wenigstens einen ABS-Drucksteuerventil (14) vorgesehen ist, sowie mit einer mittels Steuerroutinen gesteuerten Berganfahrhilfe- und/oder Kriechunterdrückungs-Funktion, im Rahmen welcher der im Rahmen einer vorangegangenen Bremsung durch den Fahrer erzeugte Bremsdruck in wenigstens einigen Bremszylindern (8) des Fahrzeugs bei erkanntem Stillstand des Fahrzeugs an einem Berg oder bei erkanntem Kriechen des Fahrzeugs in dem wenigstens einen Bremszylinder (8) wenigstens gehalten wird, ohne dass der Fahrer weiterhin die Bremse betätigen muss, **dadurch gekennzeichnet, dass** sämtliche Steuerroutinen der Berganfahrhilfeund/oder Kriechunterdrückungs-Funktion in dem Bremssteuergerät (4) implementiert sind und dass das Bremssteuergerät (4) ausgebildet ist, dass es zur Realisierung der Berganfahrhilfe- und/oder Kriechunterdrückungs-Funktion ausschließlich das wenigstens eine ABS-Drucksteuerventil (14) und das wenigstens eine ASR-Ventil (20, 22) ansteuert.

2. Bremseinrichtung nach Anspruch 1, **dadurch gekennzeichnet, dass** im Falle eines aktivierten Betriebsmodus "Berganfahrhilfe- und/oder Kriechunterdrückungs-Funktion" und bei gelöster Bremse das wenigstens eine ABS-Druckssteuerventil (14) und das ASR-Ventil (20, 22) durch das Bremssteuergerät (4) derart angesteuert werden, dass das wenigstens eine ABS-Drucksteuerventil (14) in eine DruckhalteStellung geschaltet wird, in welcher der durch die vorangehende Bremsung erzeugte höchste Bremsdruck in dem wenigstens einen Bremszylinder (8) gehalten wird, und das wenigstens eine ASR-Ventil (20, 22) in eine Stellung geschaltet wird, in welcher es das wenigstens eine ABS-Drucksteuerventil (14) eingangsseitig mit dem Druckmittelvorrat (28, 30) verbindet.

3. Bremseinrichtung nach Anspruch 2, **dadurch gekennzeichnet, dass** wenigstens ein Längsbeschleunigungssignale an das Bremssteuergerät (4) aussteuernder Längsbeschleunigungssensor (40) vorgesehen ist, wobei der Betriebsmodus "Berganfahrhilfe- und/oder Kriechunterdrückungs-Funktion" vom Bremssteuergerät (4) aktiviert wird, wenn die gemessene Längsbeschleunigung (aₓ) einen unteren Grenzwert überschreitet und in das Bremssteuergerät (4) weiterhin Signale eingesteuert werden, welche einen Stillstand des Fahrzeugs repräsentieren.

4. Bremseinrichtung nach Anspruch 3, **dadurch gekennzeichnet, dass** der Stillstand des Fahrzeugs durch Signale von der ABS-Funktion und/oder der ASR-Funktion zugeordneten Raddrehzahlsensoren (2) detektierbar ist.

5. Bremseinrichtung nach einem der Ansprüche 2 bis 4, **dadurch gekennzeichnet, dass** wenigstens ein Drucksensor (42, 44) in einen Druckpfad (10, 12) zwischen dem Betriebsbremsventil (6) und dem wenigstens einen ABS-Drucksteuerventil (14) geschaltet ist, wobei ein Lösen der Bremse durch einen einen charakteristischen Druckwert unterschreitenden Druckwert in diesem Druckpfad (10, 12) detektierbar ist.

6. Bremseinrichtung nach einem der vorhergehenden Ansprüche, **dadurch gekennzeichnet, dass** wenigstens ein Wechselventil (36, 38) vorgesehen ist, welches eingangsseitig an das wenigstens eine ASR-Ventil (20, 22) sowie an einen Kanal (16, 18) des Betriebsbremsventils (6) und ausgangsseitig an das wenigstens eine ABS-Drucksteuerventil (14) angeschlossen ist, um den jeweils größeren Druck an seinen beiden Eingängen auf seinen Ausgang weiter zu steuern.

7. Bremseinrichtung nach einem der vorhergehenden Ansprüche, **dadurch gekennzeichnet, dass** das wenigstens eine ABS-Drucksteuerventil (14) wenigstens ein von einem Magnetventil vorgesteuertes Membranventil beinhaltet.

8. Bremseinrichtung nach einem der vorhergehenden Ansprüche, **dadurch gekennzeichnet, dass** das wenigstens eine ASR-Ventil (20, 22) wenigstens ein 3/2-Wege-Magnetventil beinhaltet.

## Claims

1. Pressure medium-actuated brake device (1) of a vehicle without brake pressure control but comprising brake slip control (ABS) for the driver-independent control of brake slip during a braking process and anti-spin regulation (ASR) for the driver-independent control of drive slip during an acceleration process, wherein, in the context of the brake slip control (ABS), at least one ABS pressure control valve (14) controlled by a brake control unit (4) for increasing, maintaining or reducing the pressure in the respective brake cylinder (8) is switched in pressure lines (10, 12) extending between a service brake valve (6) and at least one brake cylinder (8), and wherein, in the context of anti-spin regulation, at least one ASR valve (20, 22) controlled by the brake control unit (4) is provided for establishing a pneumatic connection between a pressure medium reservoir (28, 30) and the at least one ABS pressure control valve (14), the vehicle further comprising a hill start assistance and/or creep suppression function controlled by control routines, in the context of which the brake pressure generated by the driver in a preceding braking operation is at least maintained in at least some brake cylinders (8) of the vehicle if its standstill is detected at a hill or if a vehicle creep is detected in the at least one brake cylinder (8), without the driver having to operate the brake, **characterised in that** all control routines of the hill start assistance and/or creep suppression function are implemented in the brake control unit (4), and **in that** the brake control unit (4) is designed to exclusively select the at least one ABS pressure control valve (14) and the at least one ASR valve (20, 22) for implementing the hill start assistance and/or creep suppression function.

2. Brake device according to claim 1, **characterised in that,** if the operating mode "hill start assistance and/or creep suppression function" is activated and the brake is released, the at least one ABS pressure control valve (14) and the ASR valve (20, 22) are selected in such a way that the at least one ABS pressure control valve (14) is switched into a pressure maintenance position in which the maximum pressure generated by the preceding braking operation is maintained in the at least one brake cylinder (8), and that the at least one ASR valve (20, 22) is switched into a position in which it connects the inlet side of the at least one ABS pressure control valve (14) to the pressure medium reservoir (28, 30).

3. Brake device according to claim 2, **characterised in that** at least one longitudinal acceleration sensor (40) outputting longitudinal acceleration signals to the brake control unit (4) is provided, wherein the operating mode "hill start assistance and/or creep suppression function" is activated by the brake control unit (4) if the measured longitudinal acceleration (aₓ) exceeds a lower limit value, and signals representing a standstill continue to be fed into the brake control unit (4).

4. Brake device according to claim 3, **characterised in that** the standstill of the vehicle is detectable from signals of wheel speed sensors (2) assigned to the ABS function and/or the ASR function.

5. Brake device according to any of claims 2 to 4, **characterised in that** at least one pressure sensor (42, 44) is incorporated into a pressure path (10, 12) between the service brake valve (6) and the at least one ABS pressure control valve (14), wherein a release of the brake is detectable from a pressure value in this pressure path (10, 12) which undershoots a characteristic pressure value.

6. Brake device according to any of the preceding claims, **characterised in that** at least one shuttle valve (36, 38) is provided, which is connected on the inlet side to the at least one ASR valve (20, 22) and to a passage (16, 18) of the service brake valve (6) and on the outlet side to the at least one ABS pressure control valve (14), in order to control the respective higher pressure at its two inlets towards its outlet.

7. Brake device according to any of the preceding claims, **characterised in that** the at least one ABS pressure control valve (14) contains at least one diaphragm valve controlled by a solenoid valve.

8. Brake device according to any of the preceding claims, **characterised in that** the at least one ASR valve (20, 22) contains at least one 3/2-way solenoid valve.

## Revendications

1. Dispositif (1) actionné par un fluide sous pression de freinage d'un véhicule, sans régulation de la pression de freinage mais avec une régulation (ABS) de glissement en freinage, pour la régulation indépendamment du conducteur du glissement en freinage pendant une opération de freinage, ainsi qu'une régulation (ASR) de glissement en traction, pour la régulation indépendamment du conducteur du glissement en traction pendant une opération d'accélération, dans lequel, dans le cadre de la régulation (ABS) de glissement en freinage, il est monté entre des conduits (10, 12) de pression, s'étendant entre une soupape (6) de frein de service et au moins un cylindre (8) de frein, au moins une soupape (14) de commande de pression ABS commandée par un appareil (4) de commande de frein, pour augmenter la pression, maintenir la pression et abaisser la pression dans le cylindre (8) de frein associé et, dans le cadre de la régulation du glissement en traction, il est prévu au moins une soupape (20, 22) ASR commandée par l'appareil (4) de commande de frein, pour ménager une liaison pour de l'air comprimé entre un réservoir (28, 30) de fluide sous pression et la au moins une soupape (14) de commande de pression ABS, ainsi que comprenant une fonction d'aide au démarrage en côte et/ou de suppression du rampement commandé au moyen de protocoles de commande, fonction dans le cadre de laquelle la pression de freinage produite par le conducteur, dans le cadre d'un freinage précédent, dans au moins certains cylindres (8) de frein du véhicule, est conservée au moins dans le au moins un cylindre (8) de frein, à la détection de l'arrêt du véhicule sur une côte ou à la détection d'un rampement du véhicule, sans que le conducteur ait en outre à actionner le frein, **caractérisé en ce que** l'ensemble des protocoles de commande de la fonction d'aide au démarrage en côte et/ou de suppression du rampement sont mis en oeuvre dans l'appareil (4) de commande de frein et **en ce que** l'appareil (4) de commande de frein est constitué de manière à commander, pour la réalisation de la fonction d'aide au démarrage en côte et/ou de suppression du rampement, exclusivement la au moins une soupape (14) de commande de pression ABS et la au moins une soupape (20, 22) ASR.

2. Dispositif de freinage suivant la revendication 1, **caractérisé en ce que**, dans le cas d'un mode de fonctionnement activé, « fonction aide au démarrage en côte et/ou suppression du rampement », et alors que le frein est desserré, la au moins une soupape (14) de commande de pression ABS et la soupape (20, 22) ASR sont commandées par l'appareil (4) de commande de frein, de manière à mettre la au moins une soupape (14) de commande de pression ABS dans une position de maintien de la pression, dans laquelle la pression de frein la plus grande produite par le freinage précédent est maintenue dans le au moins un cylindre (8) de frein, et à mettre la au moins une soupape (20, 22) ASR dans une position dans laquelle elle met la au moins une soupape (14) de commande de pression ABS du côté de l'entrée, en communication avec le réservoir (28, 30) de fluide sous pression.

3. Dispositif de freinage suivant la revendication 2, **caractérisé en ce qu'**il est prévu au moins un capteur (40) d'accélération longitudinale, envoyant des signaux d'accélération longitudinale à l'appareil (4) de commande de frein, le mode de fonctionnement « fonction aide au démarrage en côte et/ou suppression du rampement » étant activé par l'appareil (4) de commande de frein lorsque l'accélération (aₓ) longitudinale mesurée dépasse une valeur limite inférieure et il est envoyé en outre, à l'appareil (4) de commande de frein, des signaux, qui représentent un état d'arrêt du véhicule.

4. Dispositif de freinage suivant la revendication 3, **caractérisé en ce que** l'état d'arrêt du véhicule peut être détecté par des signaux de capteur (2) de vitesse de rotation de roue associés à la fonction ABS et/ou à la fonction ASR.

5. Dispositif de freinage suivant l'une des revendications 2 à 4, **caractérisé en ce qu'**au moins un capteur (42, 44) de pression est monté dans un trajet (10, 12) de pression entre la soupape (6) de frein de service et la au moins une soupape (14) de commande de frein ABS, un desserrage du frein pouvant être détecté par une valeur de pression, dans ce trajet (10, 12) de pression, devenant inférieure à une valeur de pression caractéristique.

6. Dispositif de freinage suivant l'une des revendications précédentes, **caractérisé en ce qu'**il est prévu au moins une soupape (36, 38) à deux voies, qui est raccordée du côté de l'entrée à la au moins une soupape (20, 22) ASR ainsi qu'un canal (16, 18) de la soupape (6) de frein de service et du côté de la sortie à la au moins une soupape (14) de commande de pression ABS, afin de régler, à sa sortie, la pression plus grande à ses deux entrées.

7. Dispositif de freinage suivant l'une des revendications précédentes, **caractérisé en ce que** la au moins une soupape (14) de commande de pression ABS comporte au moins une soupape à membrane commandée par une électrovanne.

8. Dispositif de freinage suivant l'une des revendications précédentes, **caractérisé en ce que** la au moins une soupape (20, 22) ASR comporte au moins une électrovanne à 3/2 voies.
